# EUROPEAN PATENT SPECIFICATION

(11) **EP 2 175 368 B1**
(45) Date of publication and mention of the grant of the patent: **14.07.2010**
(21) Application number: 08305674.7
(22) Date of filing: 13.10.2008
(51) Int. Cl.: G06F 9/46, G06F 9/48

(54) **Method for synchronizing access to a shared resource, corresponding device, storage means, and software program therefore**
Verfahren zur Synchronisierung des Zugriffs auf eine gemeinsam benutzte Ressource, entsprechende Vorrichtung, Speichermittel und Softwareprogramm dafür
Procédé pour la synchronisation de l'accès à des ressources partagées, dispositif correspondant, moyen de stockage, et programme logiciel correspondant

(43) Date of publication of application: 14.04.2010
(73) Proprietor: Alcatel Lucent, 75008 Paris (FR)
(72) Inventor: Jeroen van Bemmel, 2312RD Leiden (NL)
(74) Representative: Brose, Gerhard

(56) References cited:
- US-A- 5 515 538
- GREG LEHEY: "Improving the FreeBSD SMP implementation" PROCEEDINGS OF THE FREENIX TRACK: 2001 USENIX ANNUAL TECHNICAL CONFERENCE, [Online] 25 June 2001 (2001-06-25), pages 155-164, XP002510496 Boston, Masssachusetts, USA Retrieved from the Internet: URL:http://www.usenix.org/events/usenix01/ freenix01/full_papers/lehey/lehey_html/ind ex.html> [retrieved on 2009-01-12]

## Description

The invention relates to a method for synchronizing access to a shared resource according to claim 1, a programmable device according to claim 8, and a software program according to claim 9.

In computing, an interrupt is an asynchronous signal from hardware indicating the need for attention or a synchronous event in software indicating the need for a change in execution. A hardware interrupt causes the processor to save its state of execution via a context switch, and begin execution of an interrupt handler. Software interrupts are usually implemented as instructions in the instruction set, which cause a context switch to an interrupt handler similar to a hardware interrupt. Interrupts are a commonly used technique for computer multitasking, especially in real-time computing. Corresponding systems are said to be interrupt-driven. An act of interrupting is also referred to as an interrupt request (IRQ).

Typical uses of interrupts include the following: system timers, disk input and output (I/O), power-off signals, and exception handling. Other interrupts exist to transfer data bytes using universal asynchronous.receivers/transmitters (UARTs) or Ethernet, sense key-presses, or control motors. For example, a conventional system timer interrupt interrupts periodically from a counter or the power-line. As a further example, a disk interrupt signals the completion of a data transfer from or to the disk peripheral. As an even further example, a power-off interrupt predicts or requests a loss of power, allowing the computer equipment to perform an orderly shutdown. Interrupts are also used in type-ahead features for buffering events like keystrokes.

Because interrupts introduce concurrency into the operating system kernel, system-level mechanisms are necessary to avoid deadlocks and protect system data structures from inadvertent concurrent access. The strategy provided for this purpose is commonly referred to as interrupt synchronization. One conventional approach to interrupt synchronization is described in the article "On µ-kernel Construction" by Jochen Liedtke, published by the 15th ACM Symposium on Operating System Principles (SOSP '95). According to this proposition, the operating system kernel itself contains only a generic interrupt handler, which sends a message to the thread of execution registered for the interrupt signal by means of a message queue. This single so-called driver thread processes the interrupt requests in the order received, thereby serializing any access to system data structures. By a thread of execution, sometimes referred to simply as a thread, is meant a sequence of executing instructions that can run independently of other threads yet can directly share data with other threads.

United States Patent Number 5,515,538 describes an improved technique for servicing interrupts in a processor by means of kernel interrupt handler threads which service the interrupt from start to finish. For efficiency, these threads do not require a complete context switch unless the interrupt handler tread is blocked. The kernel used in this approach makes use of pre-prepared interrupt handler threads for additional efficiency, and these interrupt handler threads are not subjected to inordinate delays caused by the phenomenon of interrupt priority inversion if they do become blocked.

A downside of the proposed approach is the overhead imposed by the frequent switching between interrupt handler and driver thread. Furthermore, in spite of its low-frequency processing, execution of the driver thread requires the reservation of dedicated system resources. It is thus an object of the invention to provide a solution to the problem of interrupt synchronization that avoids unnecessary overhead in terms of processing performance or memory consumption.

This object is achieved by a method according to claim 1, a programmable device according to claim 8, storage means according to claim 9, and a software program according to claim 10.

A main idea of the invention is to check, within the thread of the interrupt handler, whether the shared resource required by the handler is currently in use, and thus locked, by another thread. If the shared resource is hot locked, the interrupt handler may proceed by reserving and accessing the shared resource without further delay. If however the shared resource is locked, the interrupt handler creates a request message pertaining to the interrupt, adds this request message, to a message queue shared among threads, and terminates. Upon completion of its operation on the shared resource, the locking, still active thread will inspect the message queue and find the pending request, which it will then process without necessitating further context or thread switches.

Further developments of the invention can be gathered from the dependent claims and the following description.

In the following the invention will be explained further making reference to the attached drawings.

To synchronize, according to an embodiment of the invention, access to a shared resource between, at least two threads of execution, a first thread of execution checks whether the shared resource is locked by a further thread of execution. In response to the shared resource being locked by the further thread of execution, the first thread of execution enqueues a request message. Upon unlocking the shared resource, the further thread of execution retrieves the request message from its queue and accesses the shared resource based on this request message.

In this context, by queue is meant a linear data structure in which entities are kept in order and the principal or only operations on the data structure are the addition of entities to the rear terminal position and removal of entities from the front terminal position. A queue is sometimes labeled a First-In-First-Out (FIFO) data structure, as the first element added to the queue will be the first one to be removed.
Fig. 1 shows a flowchart depicting a method according to an embodiment of the invention.
Fig. 2 shows a C++ code excerpt used to implement the method of Fig. 1.
Fig. 3 shows a further C++ code excerpt used to implement a further method according to the invention.

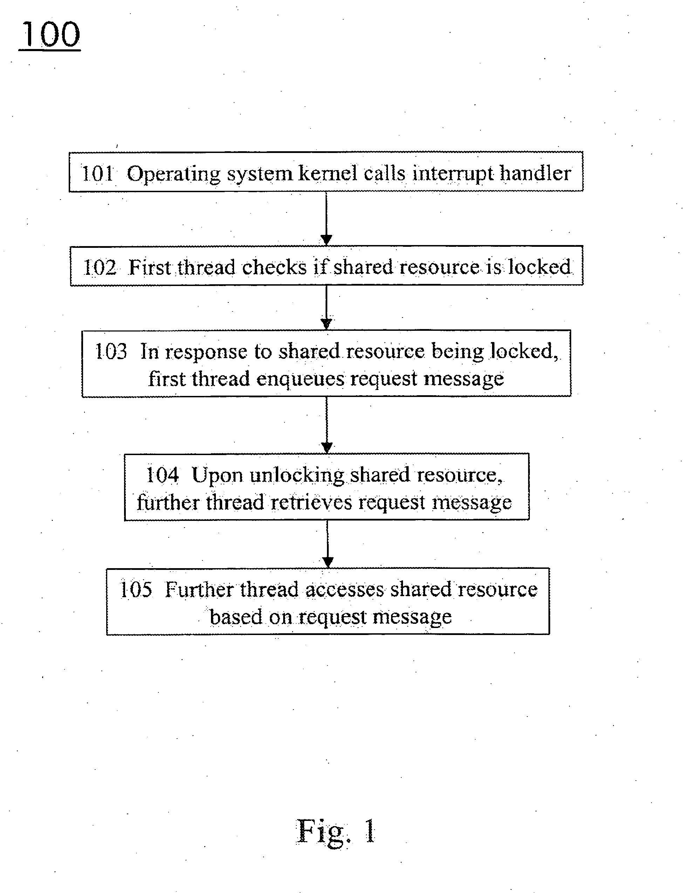

In the following, a method according to the invention is elucidated by way of example, referencing Fig. 1.

The flowchart 100 of Fig. 1 comprises an initial event 101, a first step 102, a second step 103, a third step 104, and a fourth step 105 mutually connected by arrows indicating a preferred order of execution.

The trigger 101 of the method of Fig. 1 is a call to an interrupt handler by the operating system kernel upon detection of an interrupt by a hardware device. An interrupt handler, also known as an interrupt service routine (ISR), is a callback subroutine in an operating system or device driver whose execution is triggered by the reception of an interrupt. To allow for an efficient communication between the hardware device and the central processing unit (CPU) executing the interrupt handler, the interrupt is implemented in hardware by means of a distinct control line connected to the CPU. To the number of control lines required, a programmable interrupt controller (PIC) is connected between: the interrupting device and the CPU's interrupt pin. Intel 8259, 8259A, and 8259B are examples of PICs that are used in the IBM Personal Computer.

In an alternative: embodiment, the interrupt is implemented as part of the memory controller. In this case, instead of being signaled by means of a distinct interrupt line, the interrupt is mapped into the system's memory address space.

In the first step 102, the interrupt handler, taking the form of a first thread of execution, checks whether a shared resource is locked by a further thread of execution. The purpose of the shared resource is to allow threads of execution to intract with the hardware device. In this embodiment, the shared resource takes the form of a portion of the system's memory address space. To enforce limits on access to the shared resource, a counter with an initial value of -1 is maintained and shared between threads, which counter is incremented by one when access to the shared resource is requested and decremented by one when access is complete. Hence, in this embodiment, the presence of a lock on the shared resource is simply verified by checking the counter value.

If the check of the first step 102 indicate that the shared resource is not currently locked and may thus be accessed, the first threaded execution proceeds by accessing the shared resource without further delay. If the shared resource is however locked, the first thread of execution proceeds as follows.

In the second step 103, in response to the shared resource being locked by the further thread of execution, the first thread of execution enqueues the request message. For this purpose, the operating system kernel maintains a shared queue to accommodate any lending interrupt requests. The data structure constituting the request message is allocated dynamically from a poof of unused memory commonly referred to as heap. Upon enqueueing the request message, the first thread of execution terminates, alleviating resource consumption and leaving any further processing to the still active further thread of execution.

To allow for the possibility of an even further thread simultaneously accessing the shared queue, the request message is enqueued by means of a lock-free algorithm. By a lock-free algorithm is meant an algorithm designed to allow multiple threads to read and write shared data concurrently without corrupting it, wherein any possibility of a lock-up is effectively ruled out. In the embodiment at hand, the algorithm used is also wait-free, i.e., is guaranteed to enqueue the request message in a finite number of steps, regardless of the action of other threads. An example of a wait-free queue implementation is disclosed in the article "Wait-free Queue Algorithms for the Real-time Java Specification" by Philippas Tsigas et al., published in the Proceedings of the Twelfth IEEE Real-Time and Embedded Technology and Applications Symposium (RTAS '06).

In the third step 104, upon unlocking the shared resource, the further thread of execution retrieves the request message from the queue. In the embodiment at hand, the further thread of execution also comprises the functionality of an interrupt handler and has just completed an operation on the shared resource that required its locking. The detection of the pending request message takes place in the course of a routine check for pending interrupt requests that is performed upon unlocking the shared resource. Again, the retrieval of the request message from the queue is effected by means of a lock-free and wait-free algorithm as described above.

In the fourth step 105, the further thread of execution accesses the shared resource based on the request message. The request message may contain further details on the operation to be performed on the shared resource, or it may simply indicate the source of the interrupt, i.e., the interrupting hardware device of the first step 102. Upon completion, the data structure representing the request message is de-allocated to free its associated system memory.

To allow for a swift and timely processing of any additional pending interrupt requests, the further thread of execution repeats the third step 104 and fourth step 105 until the queue is empty, i.e., does not contain any remaining request messages. This procedure allows to iteratively process a plurality of pending requests within the same further thread of execution, thus eliminating the need for switching between multiple threads.

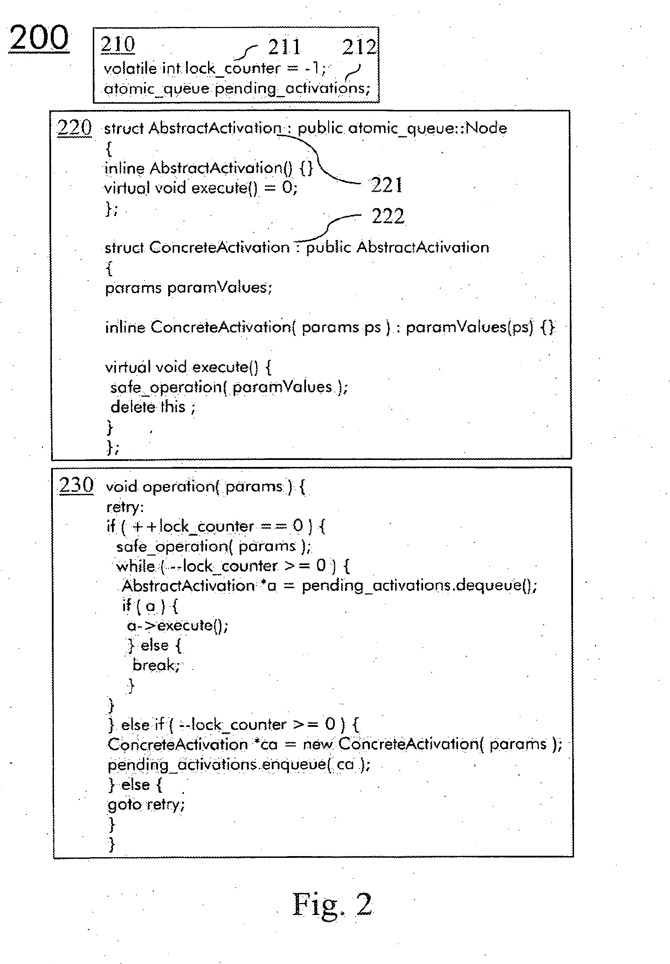

Fig. 2 shows a code excerpt used to implement the method of Fig. 1. The example of Fig. 2 uses the C⁺⁺ programming language as ratified in ISO/IEC 14882:2003, Second edition.

Fig. 2 shows a translation unit 200 comprising variable definitions 210, class definitions 220, and a function definition 230. The variable definitions 210 comprise a lock counter 211 and a shared queue 212. The function definitions 220 comprise a base class definition 221 and a derived class definition 222.

The base class definition 221 serves to define the abstract base class AbstractActivation for representing a pending interrupt request. The derived class definition 222 serves to define the class ConcreteActivation, which is derived from the abstract base class AbstractActivation. The function definition 230 serves to define function operation, which effectively implements the steps 102 through 105 of the method 100 by means of the lock counter 211 and the shared queue 212.

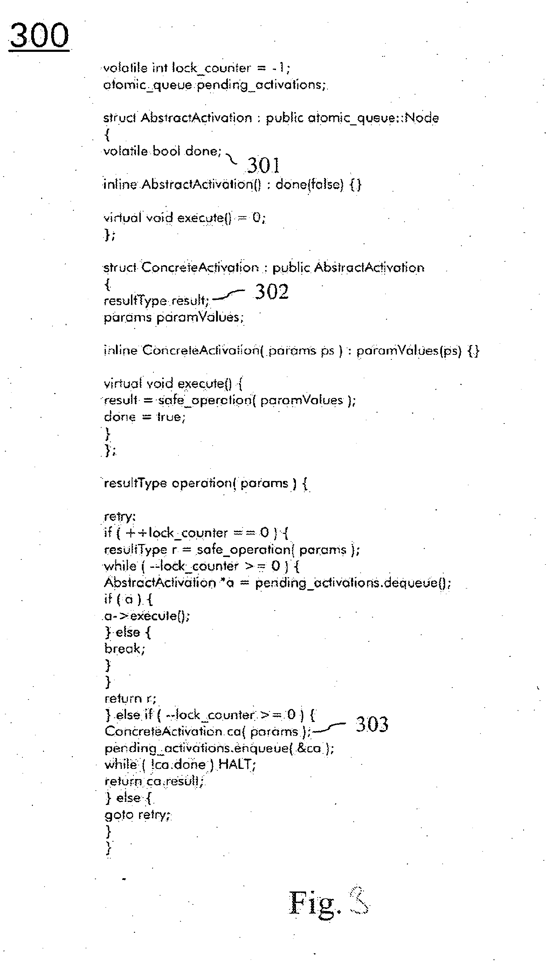

Fig. 3 shows a further C++ code excerpt 300 used to implement a further method according: to the invention. The code excerpt 300 comprises, inter alia, a first member variable definition 301, a second member variable definition 302, and a local variable definition 303.

In the example of Fig. 3, a data structure constitutes the resource that is to be shared between the threads or execution. In contrast to the scenario of Fig. 1 and 2, the access to the shared data structure yields a result, which is to be returned to a parent process. Consequently, the first thread of execution needs to halt until this result is available.

To meet these requirements, the abstract base class definition AbstractActivation of Fig. 3 comprises additional elements which are absent from the code excerpt 200 of Fig. 2. In particular, the first member variable definition 301 defines a member variable done of the abstract base class AbstractActivation, its value indicating whether the associated request has already been served. Furthermore, the second member variable definition 302 defines a member variable result, its value indicating the result of the request, upon completion.

In contrast to the function definition 230 of Fig. 2, the implementation of Fig. 3 makes use of the fact that, due to the longevity of the first thread of execution, the request message only needs to be stored in memory during the lifetime of the first thread. Hence, the dynamic memory allocation of Fig. 2 is essentially replaced by the local variable definition 303, which serves to defile the local variable ca, having automatic storage duration. The storage for this object lasts until the function operation exits, at which point the associated request has been completed and the object may be destroyed.

The method is implemented in a preferred embodiment through or together with a software program written in e.g. Very high speed integrated circuit Hardware Description Language (VHDL) or C, C++, Java, or using another programming language, or implemented by one or more VHDL, C, C++, or Java processes or routines, or several software modules being executed on at least one hardware device. Alternatively, the method is implemented in hardware only, e.g. making use of an ASPIC. The described embodiment are to be considered in all respects only as illustrative and not restrictive. Furthermore, the order of the steps for performing the invention is not critical, and as can be understood by those skilled in the art, the order may vary without departing from the scope of the invention.

The programmable device can be any kind of device which can be programmed including e.g. any kind of computer like a server or a personal computer, an FPGA, a processor, or the like, or any combination thereof, e.g. one processor and two FPGAs.

The storage means could be any kind of data repository in any storage medium soch as a CD or disk, e.g. USB memory stick or any kind of memory, e.g. at least one RAM or ROM, or the like, or any combination thereof, e.g. one ROM and two RAMs, or two disks, etc.

The software program is a set of instructions which could be created using JAVA, C, C++, HTML, LISP, or another programming language.

## Claims

1. A method for synchronizing access to a shared resource between at least two threads of execution, the method comprising the steps of
retrieving (103) a request message from a queue (212) and,
based on the request message, accessing (104) the shared resource,
**characterized in that** the method comprises the precursory steps of
checking (101), in a first thread of execution, whether the shared resource is locked by a further thread of execution,
in response to the shared resource being locked by the further thread of execution, enqueueing (102) the request message by the first thread of execution, and,
upon enqueueing the request message, terminating the first thread of execution,
wherein the first thread of execution and the further thread of execution run interrupt handlers, the request message is retrieved (103) by the further thread of execution upon unlocking the shared resource and the shared resource is accessed (104) by the further thread of execution based on the request message.

2. A method according to claim 1, **characterized in that** the method further comprises maintaining a lock counter (211), wherein a lock on the shared resource is indicated by a threshold limit value of the lock counter (211) and access to the shared resource is signaled by either of the following:
incrementing the lock counter and
decrementing the lock counter.

3. A method according to claim 1, **characterized in that** the enqueueing and retrieving of the request message are effected by lock-free algorithms.

4. A method according to claim 1, **characterized in that** the access to the shared resource yields a result (302) 3 and the method further comprises the steps of halting the first thread of execution until the result (302) is available and returning the result (302) to a parent process.

5. A method according to claim 1, **characterized in that** the method further comprises the step of detecting an interrupt by a hardware device, wherein the shared resource is connected to the hardware device, the first thread of execution, takes the form of an interrupt handler triggered by a reception of the interrupt, and the request message comprises an interrupt request.

6. A method according to claim 5, a **characterized in that** the method further comprises multiplexing interrupts by a plurality of hardware devices by means of an interrupt controller circuit.

7. A method according to claim 5, **characterised in that** the interrupt is indicated by writing data to a memory and the reception of the interrupt is effected by reading the data from the memory.

8. A programmable device comprising storage means with a software program recorded thereon, the software program comprising instructions which, when executed on the device, cause the device to carry out the steps of,
retrieving (103) a request message from a queue (212) and,
based on the request message, accessing (104) the shared resource,
**characterized in that** the instructions, when executed on the device, further cause the device to carry out the steps of
checking (101), in a first thread of execution, whether the shared resource is locked by a further thread of execution,
in response to the shared resource being locked by the further thread of execution, enqueueing (102) the request message by the first thread of execution, and,
upon enqueueing the request message, terminating the first thread of execution,
wherein the first thread of execution and the further thread of execution run interrupt handlers, the request message is retrieved (103) by the further thread of execution upon unlocking the shared resource and the shared resource is accessed (104) by the further thread of execution based on the request message.

9. A software program (200, 300) synchronizing access to a shared resource between at least two threads of execution,
the software program (200, 300) comprising instructions adapted to perform, when the program (200, 300) is executed on a programmable device, the steps of
retrieving (103) a request message from a queue (212) and,
based on the request message, accessing (104) the shared resource,
**characterized in that** the instructions are further adapted to perform, when the program (200, 300) is executed on the programmable device, the precursory steps of
checking (101), in a first thread of execution, whether the shared resource is locked by a further thread of execution,
in response to the shared resource being locked by the further thread of execution, enqueueing (102) the request message by the first thread of execution, and,
upon enqueueing the request message, terminating the first thread of execution,
wherein the first thread of execution and the further thread of execution run interrupt handlers, the request message is retrieved by the further thread of execution upon unlocking the shared resource and the shared resource is accessed by the further thread of execution based on the request message.

## Patentansprüche

1. Ein Verfahren zur Synchronisierung des Zugriffs auf eine gemeinsam benutzte Ressource zwischen mindestens zwei Ausführungsthreads, wobei das Verfahren die folgenden Schritte umfasst:
Auffinden (103) einer Anforderungsnachricht in einer Warteschlange (212), und,
basierend auf der Anforderungsnachricht, Zugreifen (104) auf die gemeinsam benutzte Ressource,
**dadurch gekennzeichnet, dass** das Verfahren die folgenden vorausgehenden Schritte umfasst:
Überprüfen (101), in einem ersten Ausführungsthread, ob die gemeinsam benutzte Ressource von einem weiteren Ausführungsthread gesperrt ist,
wenn die gemeinsam benutzte Ressource von dem weiteren Ausführungsthread gesperrt ist, Einfügen (102) der Anforderungsnachricht in die Warteschlange durch den ersten Ausführungsthread, und
nach Einfügen der Anforderungsnachricht in die Warteschlange, Beenden des ersten Ausführungsthreads,
wobei der erste Ausführungsthread und der weitere Ausführungsthread Unterbrechungs-Handler ausführen, die Anforderungsnachricht nach Entsperren der gemeinsam benutzten Ressource von dem weiteren Ausführungsthread aufgefunden (103) wird, und der weitere Ausführungsthread auf der Basis der Anforderungsnachricht auf die gemeinsame Ressource zugreift (104).

2. Ein Verfahren nach Anspruch 1, **dadurch gekennzeichnet, dass** das Verfahren weiterhin die Unterstützung eines Sperrzählers (211) umfasst, wobei eine Sperrung auf der gemeinsam benutzten Ressource von einem Schwellengrenzwert des Sperrzählers (211) angegeben und der Zugriff auf die gemeinsam benutzte Ressource entweder durch:
Inkrementieren des Sperrzählers, oder durch
Dekrementieren des Sperrzählers
signalisiert wird.

3. Ein Verfahren nach Anspruch 1, **dadurch gekennzeichnet, dass** das Einfügen in die Warteschlange und das Auffinden der Anforderungsnachricht durch Lock-Free-Algorithmen erfolgt.

4. Ein Verfahren nach Anspruch 1, **dadurch gekennzeichnet, dass** der Zugriff auf die gemeinsam benutzte Ressource ein Ergebnis (302) liefert und das Verfahren weiterhin die Schritte des Blockierens des ersten Ausführungsthreads, bis das Ergebnis (302) verfügbar ist, und das Rücksenden des Ergebnisses (302) an einen Elternprozess umfasst.

5. Ein Verfahren nach Anspruch 1, **dadurch gekennzeichnet, dass** das Verfahren weiterhin den Schritt des Erkennens einer Unterbrechung durch eine Hardware-Vorrichtung umfasst, wobei die gemeinsam benutzte Ressource an die Hardware-Vorrichtung angeschlossen ist, der erste Ausführungsthread die Form eines von einem Empfang der Unterbrechung getriggerten Unterbrechungs-Handlers annimmt, und die Anforderungsnachricht eine Unterbrechungsanforderung umfasst.

6. Ein Verfahren nach Anspruch 5, **dadurch gekennzeichnet, dass** das Verfahren weiterhin das Multiplexen von Unterbrechungen durch eine Vielzahl von Hardware-Vorrichtungen anhand einer Unterbrechungssteuerschaltung umfasst.

7. Ein Verfahren nach Anspruch 5, **dadurch gekennzeichnet, dass** die Unterbrechung durch Schreiben von Daten in einen Speicher angegeben wird und der Empfang der Unterbrechung durch Lesen der Daten aus dem Speicher erfolgt.

8. Eine programmierbare Vorrichtung mit Speichermitteln und einem darauf aufgezeichneten Software-Programm, wobei das Software-Programm Befehle umfasst, welche bei deren Ausführung auf der Vorrichtung die Vorrichtung veranlassen, die folgenden Schritte auszuführen:
Auffinden (103) einer Anforderungsnachricht in einer Warteschlange (212), und,
basierend auf der Anforderungsnachricht, Zugreifen (104) auf die gemeinsam benutzte Ressource,
**dadurch gekennzeichnet, dass** die Befehle bei deren Ausführung auf der Vorrichtung weiterhin die Vorrichtung veranlassen, die folgenden Schritte auszuführen:
Überprüfen (101), in einem ersten Ausführungsthread, ob die gemeinsam benutzte Ressource von einem weiteren Ausführungsthread gesperrt ist,
wenn die gemeinsam benutzte Ressource von einem weiteren Ausführungsthread gesperrt ist, Einfügen (102) der Anforderungsnachricht in die Warteschlange durch den ersten Ausführungsthread, und
nach Einfügen der Anforderungsnachricht in die Warteschlange, Beenden des ersten Ausführungsthreads,
wobei der erste Ausführungsthread und der weitere Ausführungsthread Unterbrechungs-Handler ausführen, die Anforderungsnachricht von dem weiteren Ausführungsthread nach Entsperren der gemeinsam benutzten Ressource aufgefunden (103) wird, und der weitere Ausführungsthread auf der Basis der Anforderungsnachricht auf die gemeinsam benutzte Ressource zugreift (104).

9. Ein Software-Programm (200, 300) zum Synchronisieren des Zugriffs auf eine gemeinsam benutzte Ressource zwischen mindestens zwei Ausführungsthreads, wobei das Software-Programm (200, 300) Befehle umfasst, die fähig sind, bei Ausführung des Programms (200, 300) auf einer programmierbaren Vorrichtung die folgenden vorausgehenden Schritte durchzuführen:
Auffinden (103) einer Anforderungsnachricht in einer Warteschlange (212), und,
basierend auf der Anforderungsnachricht, Zugreifen (104) auf die gemeinsam benutzte Ressource,
**dadurch gekennzeichnet, dass** die Befehle weiterhin fähig sind, bei Ausführung des Programms (200, 300) auf der programmierbaren Vorrichtung die folgenden vorausgehenden Schritte auszuführen:
Überprüfen (101), in einem ersten Ausführungsthread, ob die gemeinsam benutzte Ressource von einem weiteren Ausführungsthread gesperrt ist,
wenn die gemeinsam benutzte Ressource von dem weiteren Ausführungsthread gesperrt ist, Einfügen (102) der Anforderungsnachricht in die Warteschlange durch den ersten Ausführungsthread, und
nach Einfügen der Anforderungsnachricht in die Warteschlange, Beenden des ersten Ausführungsthreads,
wobei der erste Ausführungsthread und der weitere Ausführungsthread Unterbrechungs-Handler ausführen, die Anforderungsnachricht von dem weiteren Ausführungsthread nach Entsperren der gemeinsam benutzten Ressource aufgefunden wird, und der weitere Ausführungsthread auf der Basis der Anforderungsnachricht auf die gemeinsame Ressource zugreift.

## Revendications

1. Procédé de synchronisation de l'accès à une ressource partagée entre au moins deux threads d'exécution, le procédé comprenant les étapes suivantes :
récupération (103) d'un message de requête dans une file d'attente (212) et
accès (104) à la ressource partagée en se basant sur le message de requête, **caractérisé en ce que** le procédé comprend les étapes préliminaires suivantes
contrôle (101) dans un premier thread d'exécution si la ressource partagée est verrouillée par un autre thread d'exécution,
en réponse au verrouillage de la ressource partagée par l'autre thread d'exécution, mise en file d'attente (102) du message de requête par le premier thread d'exécution, et
à la mise en file d'attente du message de requête, terminaison du premier thread d'exécution,
le premier thread d'exécution et l'autre thread d'exécution exécutant des gestionnaires d'interruption, le message de requête étant récupéré (103) par l'autre thread d'exécution lors du déverrouillage de la ressource partagée et l'accès (104) à la ressource partagée par l'autre thread d'exécution ayant lieu en se basant sur le message de requête.

2. Procédé selon la revendication 1, **caractérisé en ce que** le procédé comprend en outre le maintien d'un compteur de verrouillages (211), un verrouillage sur la ressource partagée étant indiqué par une valeur limite de seuil du compteur de verrouillages (211) et l'accès à la ressource partagée étant signalé par l'un des événements suivants :
incrémentation du compteur de verrouillages et
décrémentation du compteur de verrouillages.

3. Procédé selon la revendication 1, **caractérisé en ce que** la mise en file d'attente et la récupération du message de requête sont réalisées par des algorithmes sans verrouillage.

4. Procédé selon la revendication 1, **caractérisé en ce que** l'accès à la ressource partagée produit un résultat (302) et le procédé comprend en outre les étapes de suspension du premier thread d'exécution jusqu'à ce que le résultat (302) soit disponible et renvoi du résultat (302) à un processus parent.

5. Procédé selon la revendication 1, **caractérisé en ce que** le procédé comprend en outre l'étape de détection d'une interruption par un dispositif matériel, la ressource partagée étant connectée au dispositif matériel, le premier thread d'exécution prenant la forme d'un gestionnaire d'interruption déclenché par une réception de l'interruption et le message de requête comprenant une requête d'interruption.

6. Procédé selon la revendication 5, **caractérisé en ce que** le procédé comprend en outre le multiplexage des interruptions par une pluralité de dispositifs matériels au moyen d'un circuit contrôleur d'interruption.

7. Procédé selon la revendication 5, **caractérisé en ce que** l'interruption est indiquée en écrivant des données dans une mémoire et la réception de l'interruption est effectuée en lisant les données depuis la mémoire.

8. Dispositif programmable comprenant des moyens de stockage dans lequel est enregistré un programme logiciel, le programme logiciel comprenant des instructions qui, lorsqu'elles sont exécutées sur le dispositif, ont pour effet que le dispositif accomplit les étapes suivantes :
récupération (103) d'un message de requête dans une file d'attente (212) et
accès (104) à la ressource partagée en se basant sur le message de requête,
**caractérisé en ce que** les instructions, lorsqu'elles sont exécutées sur le dispositif, ont en outre pour effet que le dispositif accomplit les étapes suivantes :
contrôle (101) dans un premier thread d'exécution si la ressource partagée est verrouillée par un autre thread d'exécution,
en réponse au verrouillage de la ressource partagée par l'autre thread d'exécution, mise en file d'attente (102) du message de requête par le premier thread d'exécution, et
à la mise en file d'attente du message de requête, terminaison du premier thread d'exécution,
le premier thread d'exécution et l'autre thread d'exécution exécutant des gestionnaires d'interruption, le message de requête étant récupéré (103) par l'autre thread d'exécution lors du déverrouillage de la ressource partagée et l'accès (104) à la ressource partagée par l'autre thread d'exécution ayant lieu en se basant sur le message de requête.

9. Programme logiciel (200, 300) de synchronisation de l'accès à une ressource partagée entre au moins deux threads d'exécution, le programme logiciel (200, 300) comprenant des instructions adaptées pour accomplir les étapes suivantes lorsque le programme (200, 300) est exécuté sur un dispositif programmable :
récupération (103) d'un message de requête dans une file d'attente (212) et
accès (104) à la ressource partagée en se basant sur le message de requête,
**caractérisé en ce que** les instructions sont en outre adaptées pour accomplir les étapes préliminaires suivantes lorsque le programme (200, 300) est exécuté sur le dispositif programmable :
contrôle (101) dans un premier thread d'exécution si la ressource partagée est verrouillée par un autre thread d'exécution,
en réponse au verrouillage de la ressource partagée par l'autre thread d'exécution, mise en file d'attente (102) du message de requête par le premier thread d'exécution, et
à la mise en file d'attente du message de requête, terminaison du premier thread d'exécution,
le premier thread d'exécution et l'autre thread d'exécution exécutant des gestionnaires d'interruption, le message de requête étant récupéré par l'autre thread d'exécution lors du déverrouillage de la ressource partagée et l'accès à la ressource partagée par l'autre thread d'exécution ayant lieu en se basant sur le message de requête.
